# EUROPÄISCHE PATENTSCHRIFT

(11) **EP 0 420 799 B1**
(45) Veröffentlichungstag und Bekanntmachung des Hinweises auf die Patenterteilung: **10.11.1993**
(21) Anmeldenummer: 90810693.3
(22) Anmeldetag: 13.09.1990
(51) Int. Cl.: E04F 13/08, F16B 43/00, F16B 19/14

(54) **Befestigungselement zum Befestigen von Isolationsplatten**
Fastening member for insulating panels
Elément de fixation pour panneaux d'isolation

(30) Priorität: 23.09.1989 DE 3931833
(43) Veröffentlichungstag der Anmeldung: 03.04.1991
(73) Patentinhaber: HILTI Aktiengesellschaft, 9494 Schaan (LI)
(72) Erfinder: Fröwis, Markus, A-6820 Frastanz (AT); Schmidle, Josef, A-6811 Göfis (AT)
(74) Vertreter: Wildi, Roland

(56) Entgegenhaltungen:
- EP-A- 0 187 168
- EP-A- 0 282 445
- DE-A- 3 538 271
- FR-A- 2 260 018

## Beschreibung

Die Erfindung betrifft ein Befestigungselement zum Befestigen von Isolationsplatten an Bauteilen, mit einem grossflächigen Kopf und einem von diesem abragenden Hohlschaft, mit Knautschzone sowie einem Widerlager für einen Nagel.

Zum Befestigen von Isolationsplatten, die zumeist aus Material mit geringer Druckfestigkeit bestehen, an Bauteilen, ist aus der EP-A-0 187 168 ein im wesentlichen pilzförmiges Befestigungselement bekannt, das mittels eines Nagels am Bauteil festgelegt wird. Der Eintreibwiderstand des Nagels kann sich aufgrund ungleichmässiger Festigkeit des beispielsweise aus Beton bestehenden Bauteiles ändern, was zu unterschiedlichen Eintreibtiefen führt, wenn die Nägel mit, eine vorgegebene Energie abgebenden pulverkraftbetriebenen Setzgeräten eingetrieben werden. Um zu vermeiden, dass unterschiedliche Eintreibtiefen des Nagels eine Zerstörung des Hohlschaftes zur Folge haben, ist ein Wandungsabschnitt als Knautschzone ausgebildet. Je nach Eintreibtiefe des Nagels wird die Knautschzone unter Abbau von Ueberenergie mehr oder weniger stark gestaucht, wodurch das Befestigungselement gesamthaft verkürzt wird. Der Kopf des Befestigungselementes dringt so mehr oder weniger tief in die Isolationsplatten ein, wodurch im Bereich der Befestigungspunkte eine oberseitige Beschädigung der Isolationsplatten eintreten kann. Zudem führt das unterschiedlich tiefe Eintauchen des Kopfes in die Isolationsplatten zu einer ungleichmässigen Kontur der Oberseite der Isolationsplatten, was sich optisch nachteilig auswirken kann.

Aus der DE-A 35 38 271 ist ein Halter für mit Warmedämmschichten und Kunststoffabdichtungsbahnen versehene Flachdacher bekannt. Dieser Halter ist mit einem Halterkopf und einem von diesem abragenden Schaft versehen, wobei der Halter mittels einer Schraube oder eines Nagels festlegbar ist. Eine federnde Zwischenlage in Form einer Feder oder eines Federringes, die zwischen dem Kopf der Schraube bzw. des Nagels und einer Auflageflache des Halters angeordnet ist, soll aufgrund des gegebenen Federweges zu einer Nachgiebigkeit führen, um zu verhindern, dass bei der Montage eine unzulässig hohe Vorbelastung entsteht.

Der Erfindung liegt die Aufgabe zugrunde, ein Befestigungselement zum Befestigen von Isolationsplatten an Bauteilen zu schaffen, das auch bei unterschiedlicher Eintreibtiefe der Nägel eine Beibehaltung der Befestigungshöhe des Kopfes gewährleistet.

Erfindungsgemäss wird die Aufgabe dadurch gelöst, dass die Knautschzone zwischen Widerlager und Hohlschaft angeordnet ist und als eine in den Hohlschaft hineinragende, freistehende, stauchbare Hülse ausgebildet ist.

Ein beispielsweise mittels pulverkraftbetriebener Setzgeräte angetriebener Nagel läuft am Widerlager auf, wobei allfällige Ueberenergie unter Verkürzung der Knautschzone abgebaut wird, während der Nagel mit dem entsprechend der Verkürzung der Knautschzone in Eintreibrichtung mitgewanderten Widerlager in Kontakt bleibt. Während des Verkürzens der Knautschzone ändert sich die Befestigungshöhe zwischen dem Kopf des Befestigungselementes und dem Bauteil nicht, so dass unabhängig von der Eintreibtiefe des Nagels kein Eintauchen des Kopfes des Befestigungselementes in die Isolationsplatten eintritt.

Die Knautschzone ist als ein in den Hohlschaft hineinragendes, freistehendes, stauchbares Teil ausgebildet. Das stauchbare Teil kann in einem vom Kopf des Befestigungselementes abgewandten Abschnitt des Hohlschaftes angeordnet sein, wodurch kurze Nägel verwendbar sind, da diese in eingetriebenem Zustand nur über ein Teilstück der Länge des Hohlschaftes das Bauteil überragen müssen.

Das stauchbare Teil ist als Hülse ausgebildet, um eine gleichmässig verteilte Uebertragung der vom Nagel über das Widerlager eingeleiteten Kräfte zu gewährleisten. Auf diese Weise wird eine definierte, weitgehend kontinuierliche Verformung der Knautschzone erreicht.

Bei einer als freistehende Hülse ausgebildeten Knautschzone entspricht die freistehende Länge der Hülse beispielsweise dem 2- bis 5-fachen des Bohrungsdurchmessers und die Wandstärke dem 0,2- bis 0,5-fachen des Bohrungsdurchmessers der Hülse.

Vorzugsweise ist die Knautschzone einstückig mit dem Hohlschaft verbunden, was zu fertigungstechnischen Vorteilen führt, insbesondere bei spritztechnischer Herstellung des Befestigungselementes aus Kunststoff.

Nach einer weiteren Ausführungsform der Erfindung ist die Hülse als gesondertes Teil beispielsweise mittels Klemmsitz im Hohlschaft befestigt. Während sich als Material für die Hülse Stahl eignet, was eine dünne Wandstärke erlaubt, kann der restliche Teil des Befestigungselementes aus Kunststoff bestehen. Diese Ausführungsform eignet sich im besonderen für Befestigungsfälle, wo mit Hohlauflagen zwischen den Isolationsplatten und den Bauteilen gerechnet werden muss.

Zweckmässig fluchtet das dem Widerlager abgewandte Ende der Hülse mit dem vom Kopf abgewandten Ende des Hohlschaftes, was dazu führt, dass die Hülse beim Auftreten allfälliger Hohlauflagen nur im Ausmasse des durch die Hohlauflage gegebenen Spaltes zum Bauteil hin verschoben werden muss.

Die Erfindung wird nachstehend anhand von Zeichnungen, die Ausführungsbeispiele wiedergeben, näher erläutert. Es zeigen:
- Fig. 1: ein an einem Bauteil mittels eines Nagels festgelegtes Befestigungselement im Längsschnitt;
- Fig. 2: das Befestigungselement nach Fig. 1 mit gegenüber der Anordnung nach Fig. 1 infolge Ueberenergie tiefer eingetriebenem Nagel;
- Fig. 3: eine andere Ausführungsform eines Befestigungselementes im Längsschnitt, vor dem Festlegen mittels eines Nagels;
- Fig. 4: das Befestigungselement nach Fig. 3, mit unter Ueberenergie in ein Bauteil eingetriebenem Nagel.

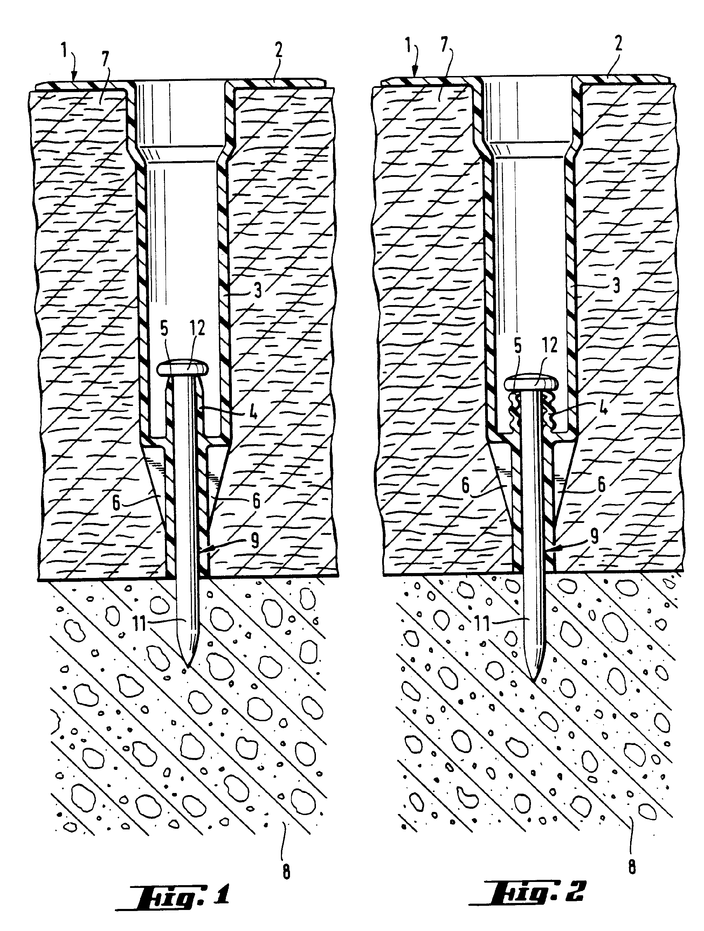

Das in den Fig. 1 und 2 dargestellte Befestigungselement 1 weist einen grossflächigen Kopf 2 auf, von dem ein Hohlschaft 3 abragt. In den Hohlschaft 3 ragt freistehend eine radial stauchbare Hülse 4 ein, deren freistehendes Ende als Widerlager 5 dient. Mit dem vom Widerlager 5 abgewandten Ende ist die Hülse 4 einstückig mit dem Hohlschaft 3 verbunden und so axial abgestützt. In dem vom Kopf 2 abgewandten Endbereich ist der Hohlschaft 3 verjüngt ausgebildet und zur Erhöhung der Biegesteifigkeit mit Längsrippen 6 versehen.

Das Befestigungselement 1 dient dem Befestigen einer Isolationsplatte 7 an einem Bauteil 8. Für den Befestigungsvorgang wird das Befestigungselement 1 vorerst mit dem Hohlschaft 3 durch die Isolationsplatte 7 hindurchgestossen. Je nach Festigkeit der Isolationsplatte 7 wird diese hierzu vorgebohrt. Der Kopf 2 kommt so in Anlage zur Isolationsplatte 7, während sich das freie Ende des Hohlschaftes 3 am Bauteil 8 abstützen kann. Mittels eines vorzugsweise pulverkraftbetriebenen Setzgerätes wird ein Nagel 9 mit einem Schaft 11 durch den Hohlschaft 3 hindurch in das Bauteil 8 eingetrieben. Bei richtiger Dosierung der Eintreibenergie läuft am Ende des Eintreibvorganges ein Nagelkopf 12 an dem Widerlager 5 auf, wodurch sich das Befestigungselement 1 und damit auch die Isolationsplatte 7 am Bauteil 8 festlegt.

Bei der Anordnung nach Fig. 2 ist das Eintreiben des Nagels 9 mit Ueberenergie erfolgt, was beispielsweise der Fall ist, wenn das Bauteil 8 infolge Inhomogenität an der Befestigungsstelle dem Nagels 9 einen geringeren Eintreibwiderstand entgegensetzt, als dies bei der Befestigungsstelle gemäss Fig. 1 der Fall ist. Durch das tiefere Eintreiben des Schaftes 11 in das Bauteil 8 wird die Hülse 4 unter Abbau der Ueberenergie zu einer balgartigen Form gestaucht, wobei der Nagelkopf 12 stets in Anlage an dem Widerlager 5 bleibt.

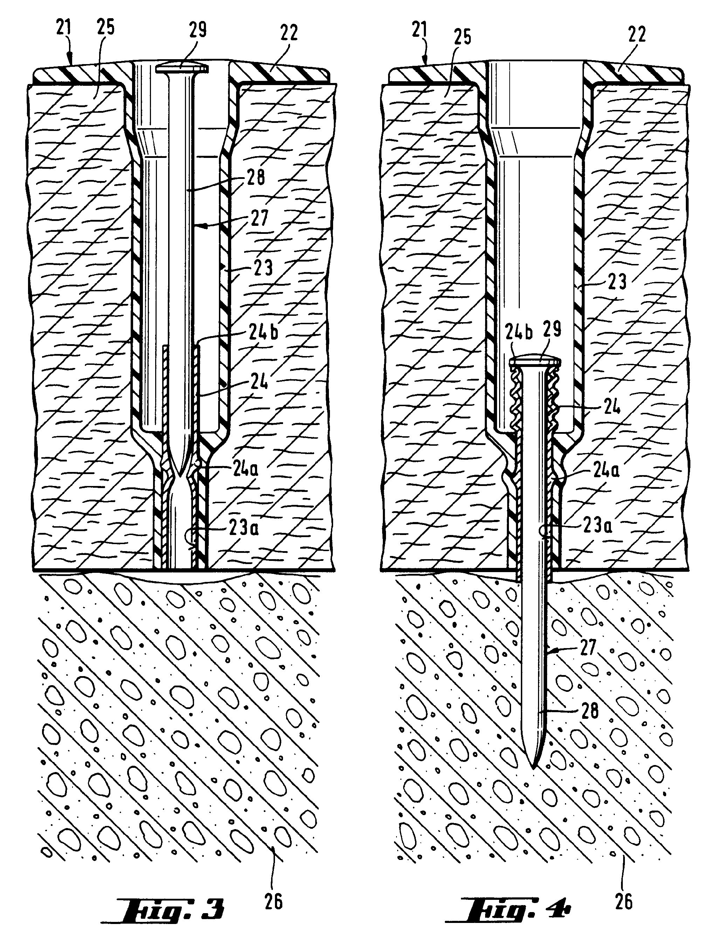

Das Befestigungselement 21 gemäss den Fig. 3 und 4 weist wiederum einen Kopf 22 und einen abragenden Hohlschaft 23 auf. In den Hohlschaft 23 ragt freistehend eine stauchbare Hülse 24, vorzugsweise aus Stahl, hinein. Die Hülse 24 ist durch Klemmsitz in der Zentralbohrung 23a des dem Kopf 22 abgewandten Endabschnittes des Hohlschaftes 23 verschiebbar gehalten, wie dies die Fig. 3 zeigt. In dem in den Endabschnitt des Hohlschaftes 23 einragenden Bereich weist die Hülse 24 eine umlaufende Wulst 24a auf, die sich in der Zentralbohrung 23a radial abstützt. Das freistehende Ende der Hülse 24 bildet ein Widerlager 24b. Das zum Befestigen einer Isolationsplatte 25 an einem Bauteil 26 vorgesehene Befestigungselement 21 wird mittels eines Nagels 27 an dem Bauteil 26 festgelegt. Hierzu wird das Befestigungselement 21 mit dem Hohlschaft 23 durch die allenfalls vorgebohrte Isolationsplatte 25 hindurchgestossen, wobei der Kopf 22 sich gegen die Oberseite der Isolationsplatte 25 legt. Das freie Ende des Hohlschaftes 23 und das Ende des im Hohlschaft 23 gefassten Bereiches der Hülse 24 ragen bis zur Unterseite der Isolationsplatte 25.

Wie der Anordnung nach Fig. 3 zu entnehmen ist, liegt die Isolationsplatte 25 an dem eine unebene Oberfläche aufweisenden Bauteil 26 im Bereich der Befestigungsstelle nicht auf - es besteht also eine sogenannte Hohlauflage, welche durch die Hülse 24 wie folgt überbrückt werden kann. Mit Beginn des Eintreibvorganges des Nagels 27 nimmt dieser unter Ueberwindung der Klemmkraft zwischen Hülse 24 und Hohlschaft 23 die Hülse 24 in Eintreibrichtung bis zum Auflaufen an der Oberseite des Bauteiles 26 mit. Alsdann verschiebt sich der Nagel 27 gegenüber der Hülse 24, um in das Bauteil 26 einzudringen. Dabei wird die Hülse 24 durch den Schaft 28 des Nagels 27 im Bereich der Wulst 24a geweitet, wodurch sich diese formschlüssig in die Wandung des Hohlschaftes 23 eindrückt, wie dies die Fig. 4 zeigt. Die Hülse 24 legt sich so im Hohlschaft 23 zuverlässig axial fest. Gegen Ende des Eintreibvorganges läuft der Nagelkopf 29 am Widerlager 24b auf. Bei allfälliger Ueberenergie kann, wie in Fig. 4 dargestellt, ein Stauchen der in den Hohlschaft 23 hineinragenden Hülse 24 erfolgen. Durch das Stauchen tritt eine Durchmesservergrösserung der freistehenden Hülse 24 ein, wodurch eine axiale Abstützung für den Hohlschaft 23 geschaffen wird.

## Patentansprüche

1. Befestigungselement (1, 21) zum Befestigen von Isolationsplatten (7, 25) an Bauteilen (8, 26) mit einem grossflächigen Kopf (2, 22) und einem von diesem abragenden Hohlschaft (3, 23) mit Knautschzone sowie einem Widerlager (5, 24b) für einen Nagel (9, 27), **dadurch gekennzeichnet**, dass die Knautschzone zwischen Widerlager (5, 24b) und Hohlschaft (3, 23) angeordnet ist und als eine in den Hohlschaft (3, 23) hineinragende, freistehende, stauchbare Hülse (4, 24) ausgebildet ist.

2. Befestigungselement nach Anspruch 1, dadurch gekennzeichnet, dass die Hülse (4) einstückig mit dem Hohlschaft (3) verbunden ist.

3. Befestigungselement nach Anspruch 1, dadurch gekennzeichnet, dass die Hülse (24) als gesondertes Teil im Hohlschaft (23) befestigt ist.

4. Befestigungselement nach Anspruch 3, dadurch gekennzeichnet, dass das dem Widerlager 24b abgewandte Ende der Hülse 24 mit dem vom Kopf (22) abgewandten Ende des Hohlschaftes 23 fluchtet.

## Claims

1. Fixing element (1, 21) for fixing insulation boards (7, 25) to assembly components (8, 26), having a large surface head (2, 22) and a therefrom extending hollow shaft (3, 23) with crumple zone and an abutment (5, 24b) for a nail (9, 27), **characterised in that** the crumble zone is arranged between the abutment (5, 24b) and the hollow shaft (3, 23) and structured as a free standing, compressible sleeve (4, 24) which intrudes into the hollow shaft (3, 23).

2. Fixing element according to claim 1, **characte****rised in that** the sleeve (4) is integrated with the hollow shaft (3).

3. Fixing element according to claim 1, **characte****rised in that** the sleeve (24) is mounted in the hollow shaft (23) as a separate element.

4. Fixing element according to claim 3, **characte****rised in that** the end of the sleeve (24) remote of the abutment (24b) is positively connected to the end of the hollow shaft (23) remote of the head (22).

## Revendications

1. Elément de fixation (1, 21) pour la fixation de panneaux d'isolation (7, 25) sur des éléments de construction (8, 26), comprenant une tête large (2, 22) et un corps creux (3, 23) partant de cette tête et pourvu d'une zone déformable ainsi que d'un contre-appui (5, 24b) pour une pointe de clouage (9, 27), **caractérisé** en ce que la zone déformable est disposée entre le contre-appui (5, 24b) et le corps creux (3, 23) et est réalisée sous la forme d'une douille écrasable (4, 24), faisant librement saillie à l'intérieur du corps creux (3, 23).

2. Elément de fixation selon la revendication 1, **caractérisé** en ce que la douille (4) est reliée d'un seul tenant au corps creux (3).

3. Elément de fixation selon la revendication 1, **caractérisé** en ce que la douille (24) est réalisée sous la forme d'une pièce séparée fixée dans le corps creux (23).

4. Elément de fixation selon la revendication 3, **caractérisé** en ce que l'extrémité de la douille (24) qui est opposée au contre-appui (24b) se trouve en alignement avec l'extrémité du corps creux (23) qui est opposée à la tête (22).
